# FASCICULE DE BREVET EUROPEEN

(11) **EP 3 427 373 B1**
(45) Date de publication et mention de la délivrance du brevet: **25.12.2019**
(21) Numéro de dépôt: 17712205.8
(22) Date de dépôt: 01.03.2017
(51) Int. Cl.: H02K 49/10

(54) **SYSTÈME DE TRANSMISSION MAGNÉTIQUE**
MAGNETISCHES ÜBERTRAGUNGSSYSTEM
MAGNETIC TRANSMISSION SYSTEM

(30) Priorité: 09.03.2016 FR 1651984
(43) Date de publication de la demande: 16.01.2019
(73) Titulaire: Institut VEDECOM, 78000 Versailles (FR)
(72) Inventeur: BENLAMINE, Raouf, 92130 Issy-les-Moulineaux (FR); HAMITI, Tahar, 78180 Montigny le Bretonneux (FR)
(74) Mandataire: Ménès, Catherine
(86) Numéro de dépôt international: PCT/FR2017/050457
(87) Numéro de publication internationale: WO 2017/153664

(56) Documents cités:
- EP-A2- 2 660 440
- WO-A1-2009/147378
- WO-A1-2015/178111
- ATALLAH K ET AL: "A Novel High-Performance Magnetic Gear", IEEE TRANSACTIONS ON MAGNETICS, IEEE SERVICE CENTER, NEW YORK, NY, US, vol. 37, no. 4, 1 juillet 2001 (2001-07-01), XP011033379, ISSN: 0018-9464

## Description

### Domaine de l'invention

La présente invention revendique la priorité de la demande française 1651984 déposée le 9 mars 2016 dont le contenu (texte, dessins et revendications) est ici incorporé par référence.

La présente invention concerne le domaine des systèmes de transmission de couple communément appelés « à engrenages magnétiques ». L'engrenage magnétique est un dispositif de couplage magnétique qui présente un rapport de vitesse et de couple de transmission entre deux dispositifs à couplage magnétique, de telle sorte que:
Ils présentent un rapport de mouvement de rotation ou de translation entre entrée et sortie, qui peut être égal à 1 dans le cas d'un accouplement magnétique pur. Ils ont un couple de traction ou limitation de facteur fonction de la force d'accouplement magnétique.

Ils évitent tout contact physique entre l'élément moteur principal et les éléments entraînés.

L'engrenage magnétique est composé d'aimants de type permanent et/ou de pièces ferromagnétiques aimantées par reluctance. Le système se compose de deux ou plusieurs éléments qui sont généralement en rotation mais pouvant être linéaires.

Ces systèmes utilisent le principe d'un couplage entre deux parties mobiles non pas par des engrenages mécaniques mais par un couplage magnétique entre deux dents formées sur les parties mobiles ou fixes. Le pas de ces dents permet de créer des rapports de transmission pour réaliser des systèmes de transmissions de vitesse par exemple.

Les dents magnétiques agissent comme un aimant avec alternance périodique des pôles magnétiques opposés sur les surfaces de contact. Ces systèmes travaillent sans contact mécanique et sont donc à l'abri de l'usure, ont un très faible bruit et sont très fiable.

Ces systèmes peuvent être utilisés dans des configurations qui ne sont pas possibles pour des engrenages, qui doivent permettre un contact physique entre les engrenages et peuvent fonctionner avec une barrière séparant complètement la force motrice de la charge.

L'engrenage couplé magnétiquement peut transmettre une force dans une enceinte fermée hermétiquement sans l'aide d'une bague d'étanchéité, qui peut fuir. Il permet d'éviter la contamination biologique ou chimique. Cela peut être un avantage dans des environnements explosifs ou dangereux.

### Etat de la technique

On connaît dans l'état de la technique différentes solutions de systèmes de couplage magnétique.

La demande de brevet WO 2009147378 décrit des engrenages magnétiques qui comprennent des premier et second éléments mobiles engrenés magnétiquement par l'intermédiaire d'un premier ensemble de bobinage électrique conçu pour produire, au moins en partie, un premier flux magnétique. Une première série de paires de pôles produit un premier flux magnétique interagissant avec un second flux magnétique produit par un second ensemble de paires de pôles. Dans une implémentation particulière, visé à la page 7 de la demande de brevet, le document D1 expose que si on veut autoriser un couple transitoire supérieur au couple nominal, on augmente le flux magnétique produit par les électro-aimants en augmentant le courant dans les bobines.

La demande de brevet WO 2015178111 décrit un autre exemple de dispositif d'engrenage à ondes magnétiques comprenant un rotor à faible vitesse est disposé entre un stator et un rotor à haute vitesse et présente, en alternance dans la direction périphérique, des premiers corps magnétiques et des premiers aimants permanents de même orientation de pôle magnétique.

Le rotor à haute vitesse a, en alternance dans la direction périphérique, des deuxièmes corps magnétiques et des deuxièmes aimants permanents d'orientation de pôle magnétique identique à celle des premiers aimants permanents.

Le stator présente, en alternance dans la direction périphérique, des troisièmes corps magnétiques pourvus de fentes autour desquelles une bobine peut être enroulée, et des troisièmes aimants permanents d'orientation de pôle magnétique identique à celle des premiers aimants permanents ; et la relation Ns = N1 ± Nh est satisfaite, où N1 est le nombre de pôles magnétiques du rotor à faible vitesse, Nh est le nombre de paires de pôles du rotor à haute vitesse, et Ns est le nombre de fentes du stator.

La demande de brevet EP2660440 décrit système de couplage électromagnétique pour transférer un couple entre les deux, ou la production d'énergie électrique à partir d'une paire de bobines coaxiales d'un moteur à turbine à gaz. Il présente, aux paragraphes [0042 à 0045], différentes combinaisons de nombres de pôles.

### Inconvénients de l'art antérieur

Les solutions de l'art antérieur ne sont pas totalement satisfaisantes car elles ne permettent pas de contrôler de manière dynamique et automatique, le décrochage qui se produit lorsque les efforts appliqués au système, notamment sur la sortie du système dépassent le couplage magnétique entre les organes du système, et produit un glissement par rapport à l'entrainement nominal des parties en interaction magnétique et des « sauts » de dents magnétiques.

Il est bien sur possible d'augmenter la puissance magnétique en prévoyant une plus grande masse d'aimant. Cela entraîne un coût élevé car il s'agit d'aimants à terres rares.

Les solutions proposant d'augmenter le courant électrique alimentant les bobines lors de phases transitoires (par exemple lorsque le véhicule accélère ou est sur une pente), avec une sélection d'un mode différent du mode de puissance nominale, conduisent à un échauffement préjudiciable au bon fonctionnement, et dégradant les performances des aimants permanents.

L'un des problèmes que l'invention cherche à résoudre est d'adapter automatiquement en toute circonstance la puissance d'alimentation des bobines, par un moyen simple et fiable, en fonction du contexte d'utilisation du système de transmission et des efforts réels auxquels ils est soumis, en limitant au mieux cette puissance pour réduire l'échauffement de l'ensemble, préjudiciable aux performances magnétiques.

### Solution apportée par l'invention

Afin de remédier à ces inconvénients, l'invention concerne selon son acception la plus générale un système de transmission entre un arbre d'entrée et un arbre de sortie constitué d'une partie ferromagnétique entrainante, une partie ferromagnétique entraînée et une partie ferromagnétique intermédiaire, ces trois parties étant mobiles relativement les unes par rapport aux autres,
- l'une desdites parties présentant N paires de pôles magnétiques interagissant avec une seconde desdites parties présentant M pièces ferromagnétiques, avec M≠N,
- ladite seconde partie interagissant avec une troisième desdites parties présentant P paires de pôles avec, selon une variante, P=|N-M|
et en ce que
- une partie au moins desdites pièces comportant un aimant permanent,
- et une partie au moins desdites pièces étant constituées par une dent polaire supportant une bobine électrique,
caractérisé en ce que ledit système comporte en outre un moyen de détection des efforts appliqués entre ledit arbre d'entrée et ledit arbre de sortie comprenant un moyen de mesure de la force électromotrice circulant dans au moins une desdites bobines, ainsi qu'un moyen de pilotage de l'alimentation desdites bobines électriques pour commander la puissance magnétique fournie par lesdits aimants permanents et les dents polaires excités par des bobines électriques, en fonction d'une valeur de consigne et du signal fourni par ledit moyen de détection des efforts.

Selon une première variante, la partie extérieure est constituée par une culasse ferromagnétique présentant des dents entourées chacune par une bobine électrique d'excitation, et supportant chacune un aimant permanent dont le sens d'aimantation est inversé pour deux dents consécutives.

Selon une deuxième variante, la partie extérieure est constituée par une culasse ferromagnétique présentant des dents, au moins certains tronçons s'étendant entre deux dents consécutives étant entourées par une bobine électrique dont les spires sont formées dans un plan radial.

Selon un premier mode de réalisation, la partie intérieure est constituée par une culasse ferromagnétique présentant des dents, au moins certains tronçons s'étendant entre deux dents consécutives étant entourées par une bobine électrique dont les spires sont formées dans un plan radial.

Selon un deuxième mode de réalisation, la partie intérieure est constituée par une culasse ferromagnétique présentant des dents, au moins certains tronçons s'étendant entre deux dents consécutives étant entourées par une bobine électrique dont les spires sont formées dans un plan radial.

Selon un troisième mode de réalisation, la partie intérieure est constituée par une culasse ferromagnétique présentant des dents, et en ce que seules les dents polaires correspondant à l'un des types de pôles (Nord ou Sud) comportant un aimant permanent et en ce que la partie intérieure comporte des bobines électriques d'excitation d'une partie au moins des pôles.

Selon un quatrième mode de réalisation, la partie intérieure est constituée par une culasse ferromagnétique présentant des dents, en ce que seules les dents polaires correspondant à l'un des types de pôles (Nord ou Sud) comportant un aimant permanent et en ce que la partie intérieure est dépourvue de bobine électrique.

Selon une variante avantageuse, certaines dents au moins présentent un aimant permanent et sont également excitées par une bobine électrique.

Selon un premier mode de réalisation, lesdites parties sont de forme tubulaire et présentent des dents s'étendant radialement.

Selon un deuxième mode de réalisation, lesdites parties sont de forme discale et présentent des dents perpendiculairement à un plan transversal.

Selon un troisième mode de réalisation, lesdites parties sont de forme linéaire et présentent des dents perpendiculairement à l'axe de déplacement relatif desdites parties.

Selon un mode de réalisation particulier, ledit moyen de pilotage comporte une interface d'entrée pour recevoir des signaux provenant de capteurs externes.

Selon un autre mode de réalisation, ledit moyen de pilotage commande une augmentation du courant d'alimentation des bobines électriques en cas de détection d'un dépassement d'une valeur seuil d'effort.

Selon un mode de réalisation particulier, pour assurer une fonction de type « failsafe » (position de sécurité en cas de défaillance) ledit moyen de pilotage commande une diminution du courant d'alimentation des bobines électriques en cas de détection d'un dépassement d'une valeur seuil d'effort.

Selon un mode de mise en œuvre particulier, la puissance fournie par les seuls aimants permanents assure une capacité de transmission d'effort correspondant à un niveau de sécurité en cas de défaillance, et en ce que le moyen de pilotage modifie la capacité de transmission d'effort par l'alimentation desdites bobines électriques. A titre d'exemple, ces bobines peuvent être alimentées par un courant afin de produire un champ magnétique de direction opposée à la direction du champ des aimants.

Selon un mode de réalisation particulier, lesdits aimants permanents sont de type Alnico ou ferrite. Dans le cas où les aimants utilisés sont de type Alnico, la magnétisation et démagnétisation peut être effectuée en cours de fonctionnement du système grâce à une alimentation adaptée des bobines. Par conséquent, les nombres de pièces N et P peuvent être modifiées, modifiant ainsi le rapport de transmission d'effort.

Selon un autre mode de réalisation particulier, l'une au moins des culasses comporte des canaux de circulation d'un fluide de refroidissement.

### Description détaillée d'exemples non limitatifs de réalisation

La présente invention sera mieux comprise à la lecture de la description qui suit, se référant aux dessins annexés correspondant à des exemples non limitatifs de réalisation, où :
- la figure 1 représente une vue en coupe transversale d'un premier exemple de réalisation d'un système avec des bobines entourant la culasse extérieure et une culasse intérieure non bobinée
- la figure 2 représente une vue en coupe transversale d'un deuxième exemple de réalisation d'un système avec des bobines entourant la culasse extérieure et une culasse intérieure bobinée
- la figure 3 représente une vue en coupe transversale d'un troisième exemple de réalisation d'un système avec des bobines entourant la culasse extérieure et une culasse intérieure présentant des dents bobinées
- la figure 4 représente une vue en coupe transversale d'un quatrième exemple de réalisation d'un système avec des culasses intérieures et extérieures bobinées dans la surface des pôles
- la figure 5 représente une vue en coupe transversale d'un cinquième exemple de réalisation d'un système avec des bobines toroïdales au rotor intérieur et au stator extérieur
- les figures 6 et 7 représentent des vues en coupe respectivement longitudinales et transversales d'une variante discale
- la figure 8 représente un schéma de principe du circuit de pilotage.

### Description d'un premier exemple de réalisation

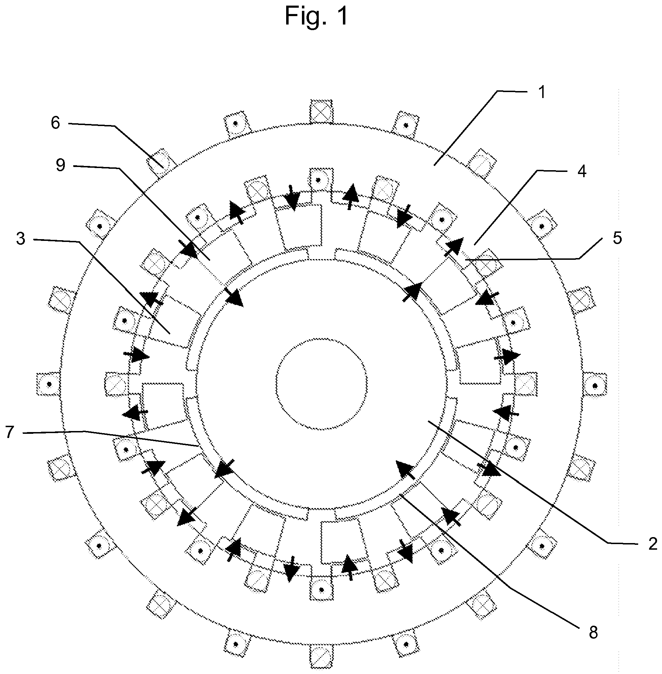

La figure 1 représente d'un système d'entraînement de configuration tubulaire. Il comprend :
- une culasse extérieure 1 réalisée en un matériau ferromagnétique, par exemple du fer doux
- une culasse intérieure 2 réalisée en un matériau ferromagnétique, par exemple du fer doux
- une couronne intermédiaire 3.

La culasse extérieure 1 présente une forme tubulaire avec des dents polaires 4 s'étendant radialement, vers l'intérieur du système. Ces dents polaires 4 présentent une section transversale rectangulaire ou trapézoïdale.

Dans l'exemple décrit, chaque dent polaire 4 porte un aimant permanent 5, aimantés selon une direction radiale. Les aimants permanents 5 présentent des polarités alternée. Si une dent polaire 4 porte un aimant permanent dont le pôle Nord est dirigé vers le centre du système, les aimants des deux dents adjacentes aimanté en sens inverse, avec le pôle Sud dirigé vers le centre du système.

Par ailleurs, la culasse est bobinée entre chaque dent polaire et présente des bobines toroïdales 6 entourant une section comprise entre deux dents polaires consécutives. Ces bobines sont alimentées en courant continu, en sens alterné. Le courant d'alimentation d'une bobine est de polarité inverse au courant d'alimentation des deux bobines adjacentes.

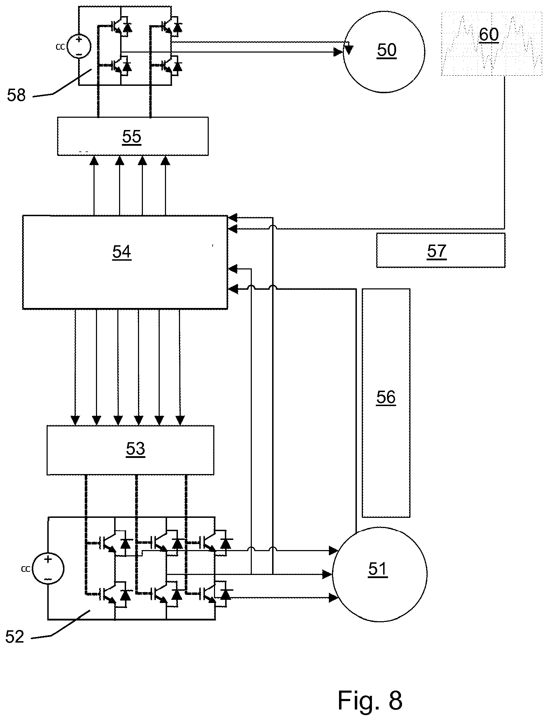

Le courant d'alimentation peut éventuellement être modulé par un courant alternatif afin de compenser les variations de couple lors de la rotation des parties, lors des sauts de pas par un circuit illustré par le schéma représenté en figure 8 et présenté plus en détail ci-après.

Le sens d'alimentation est déterminé :
- soit pour que le champ magnétique engendré dans les dents polaires 4 par les bobines électrique 6 s'additionne au champ magnétique produit par les aimants permanents 5, ce qui permet d'augmenter de manière maîtrisée le couple de décrochage, notamment lorsque les efforts à transmettre sont importants
- soit pour que le champ magnétique engendré dans les dents polaires 4 par les bobines électrique 6 soit de sens inverse au champ magnétique produit par les aimants permanents 5, ce qui permet de réduire de manière maîtrisée le couple de décrochage, par exemple pour commander un débrayage dans certains circonstances prédéterminées.

Selon une variante, il est aussi prévu d'alimenter de manière distincte des séries de bobines, par exemple pour neutraliser une partie des dents polaires. Dans ce cas, certaines bobines sont alimentées pour engendrer un champ magnétique s'opposant à celui engendré par l'aimant permanent de la dent associée à cet aimant. Cette solution permet de modifier le nombre de pièces actifs et donc le taux de transmission.

Dans ce premier exemple de réalisation, la partie intérieure 2 est constituée par une pièce tubulaire portant un axe de transmission et des aimants permanents 7, 8 aimantés radialement, en sens alternés. Ces aimants sont en forme de tuiles et sont collés sur la culasse 2 ou logés dans des cannelures orientées axialement.

La partie intérieure 2 est coaxiale avec les autres parties.

La couronne intermédiaire 3 présente des dents 9 s'étendant radialement, entre la surface extérieure de la partie intérieure 2 et la surface intérieure de la partie extérieure 1. Cette couronne est constituée en un matériau ferromagnétique, les dents sont éventuellement surmoulées avec une matière plastique.

### Description d'un deuxième exemple de réalisation

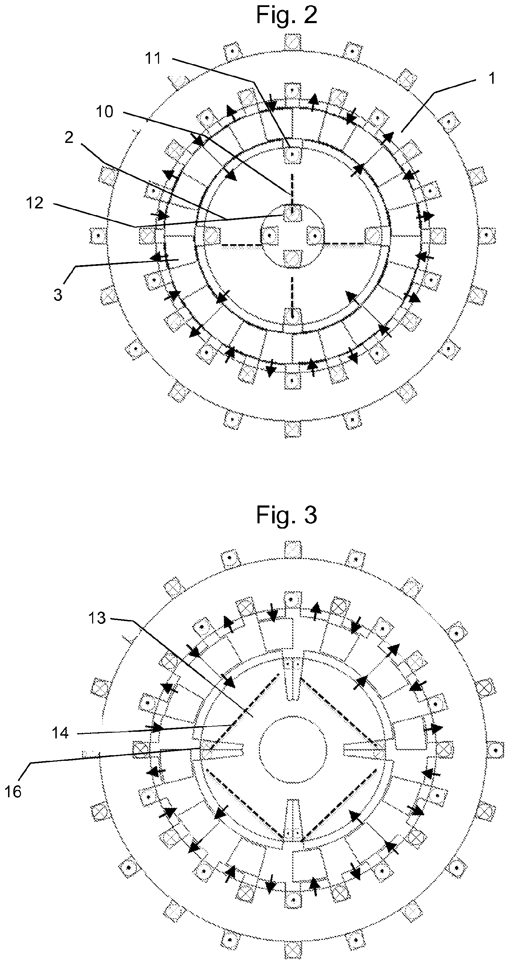

La figure 2 représente une vue en coupe transversale d'un deuxième exemple de réalisation, se distinguant du précédent par le fait que la partie intérieure 2 est également bobinée. Les bobines 10 s'étendent selon des plans parallèles à un plan transversal contenant l'axe de rotation. A cet effet, la partie intérieure présente des rainures longitudinales 11 prévue à la surface tubulaire extérieure et des rainures longitudinales 12 prévues à la surface tubulaire intérieure pour le passage des fils conducteurs formant des spires entourant la portion de la partie 3, entre deux dents polaires adjacentes.

Comme pour les bobines de la partie extérieure, le sens d'alimentation est déterminé :
- soit pour que le champ magnétique engendré dans les dents polaires par les bobines électrique 10 s'additionne au champ magnétique produit par les aimants permanents, ce qui permet d'augmenter de manière maîtrisée le couple de décrochage, notamment lorsque les efforts à transmettre sont importants
- soit pour que le champ magnétique engendré dans les dents polaires par les bobines électrique 1 soit de sens inverse au champ magnétique produit par les aimants permanents 5, ce qui permet de réduire de manière maîtrisée le couple de décrochage, par exemple pour commander un débrayage dans certains circonstances prédéterminées.

Selon une variante, il est aussi prévu d'alimenter de manière distincte des séries de bobines, par exemple pour neutraliser une partie des dents polaires. Dans ce cas, certaines bobines sont alimentées pour engendrer un champ magnétique s'opposant à celui engendré par l'aimant permanent de la dent associée à cet aimant. Cette solution permet de modifier le nombre de pièces actifs et donc le taux de transmission.

### Description d'un troisième exemple de réalisation

La figure 3 représente une vue en coupe transversale d'un troisième exemple de réalisation, se distinguant du précédent par le fait que la partie intérieure est bobinées d'une manière différente, les spires d'une bobine 13 entourant une dent polaire 14.

Les bobines 15 s'étendent selon des plans parallèles à un plan transversal contenant l'axe de rotation. A cet effet, la partie intérieure présente des rainures 16 longitudinales pour le passage des fils conducteurs formant des spires entourant les dents polaires de la partie intérieure.

### Description d'un quatrième exemple de réalisation

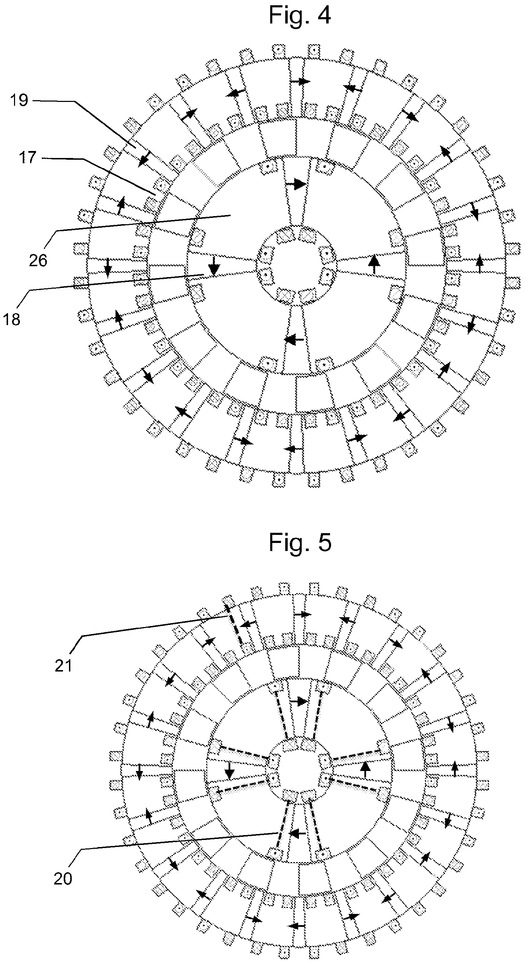

La figure 4 représente une vue en coupe transversale d'un quatrième exemple de réalisation, où les bobines 26, 17 sont logées dans le pôle entre les aimants respectivement 18, 19, pour les parties respectivement extérieure 1 et intérieure 2.

### Description d'un cinquième exemple de réalisation

La figure 5 représente une vue en coupe transversale d'un cinquième exemple de réalisation, se distinguant de la réalisation précédente par les bobinages des parties polaires intérieure 2 et extérieure 1. Les bobines 20 de la partie intérieure 2 et 21 de la partie extérieure 1 sont de forme toroïdale.

### Description d'un sixième exemple de réalisation

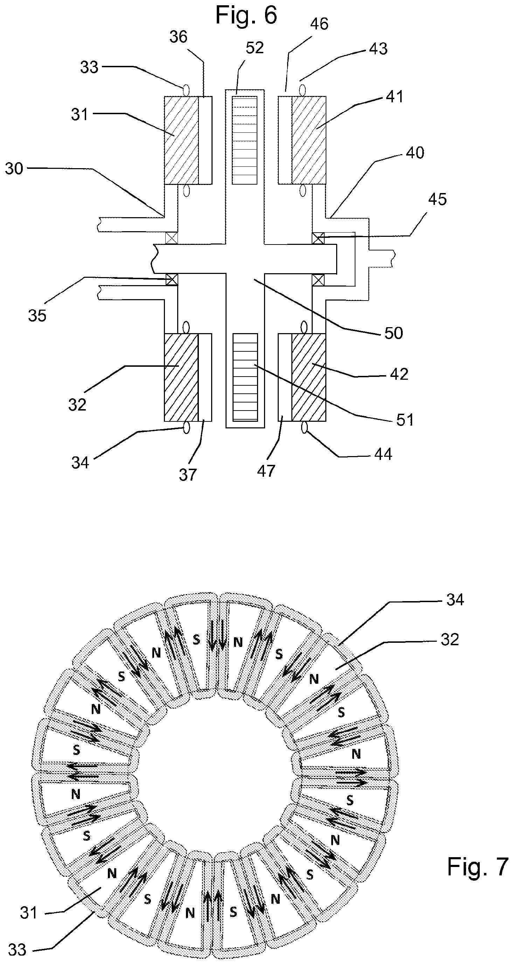

Les figures 6 et 7 représentent des vues en coupe respectivement longitudinales et transversales d'une variante de réalisation de forme discale.

Le système de transmission est constitué par deux parties ferromagnétiques de formes discales 30, 40, présentant des dents ferromagnétiques 31, 32 ; 41, 42 de forme sensiblement triangulaires, entourées par des bobines respectivement 33, 34 ; 43, 44.

Les dents ferromagnétiques 31, 32 ; 41, 42 sont par ailleurs pourvus d'aimants permanents 36, 37 ; 46, 47.

La pièce intermédiaire 50 est un disque en matière plastique comprenant des pièces ferromagnétiques 51, 52 surmoulées.

Ce disque 50 est guidé par rapport respectivement aux deux parties ferromagnétiques de formes discales 30, 40, par des roulements 35, 45.

### Description d'un exemple de circuit de pilotage

La figure 8 représente un schéma de principe du circuit d'une machine électrique et du système de transmission magnétique.

Le système de transmission magnétique 50 est couplé à la machine électrique 51. Une des parties tournantes du système de transmission 50 est entrainée par le rotor de la machine 51 par une liaison mécanique. En plus du système de pilotage de la machine électrique, le système de transmission magnétique 50 est également piloté. L'alimentation des bobines des électro-aimants du système de transmission 50 peut être effectuée avec un courant continu ou alternatif.

La machine électrique 51 est alimentée par un onduleur de tension réversible 52. Sur la figure 8, la machine 51 est une machine triphasée et la commande de l'onduleur 52 est réalisée avec un circuit de commande rapprochée 53 dont les consignes sont émises par calculateur 53 exécutant un algorithme de contrôle/commande. Les consignes de courant sont déduites à partir des signaux provenant d'un capteur 56 de mesure du courant et d'un capteur 57 fournissant un signal fonction de la position du rotor de la machine. Le capteur 56 mesure la tension induite 60 dans les bobines du système de transmission magnétique 50.

Sur la figure 8, les bobines du système de transmission magnétique 50 sont alimentées par un hacheur réversible 55. Celui-ci est commandé par un circuit de commande rapprochée 54 dont les consignes de courant sont calculées par l'algorithme de contrôle/commande.

Le pilotage du système de transmission est possible grâce à l'estimation de l'angle interne à partir de la tension induite dans le bobinage. L'angle interne permettra de prévenir le décrochage et ainsi connaître les consignes de courant d'alimentation des bobines en temps réel afin d'éviter le décrochage. Une marge de sécurité est à prévoir.

## Revendications

1. Système de transmission entre un arbre d'entrée et un arbre de sortie constitué d'une partie ferromagnétique entrainante 2, une partie ferromagnétique entraînée 1 et une partie ferromagnétique intermédiaire 3, ces trois parties 1, 2, 3 étant mobiles relativement les unes par rapport aux autres,
- l'une desdites parties 1 présentant N paires de pôles magnétiques interagissant avec une seconde desdites parties 3 présentant M pièces ferromagnétiques, avec M≠N,
- ladite seconde partie 3 interagissant avec une troisième desdites parties 2 présentant P paires de pôles,
et en ce que
- une partie au moins desdites pièces comportant un aimant permanent,
- et une partie au moins desdites pièces étant constituées par une dent polaire supportant une bobine électrique,
**caractérisé en ce que** ledit système comporte en outre un moyen de détection des efforts appliqués entre ledit arbre d'entrée et ledit arbre de sortie constitué par un moyen de mesure de la force électromotrice circulant dans au moins une desdites bobines, et un moyen de pilotage de l'alimentation desdites bobines électriques pour commander la puissance magnétique fournie par lesdits aimants permanents et les dents polaires excités par des bobines électriques, en fonction d'une valeur de consigne et du signal fourni par ledit moyen de détection des efforts.

2. Système de transmission selon la revendication 1 **caractérisé en ce que** ladite seconde partie 3 interagissant avec une troisième desdites parties 2 présentant P paires de pôles avec P=|N-M|,
où P désigne le nombre de paires de pôles de ladite troisième desdites parties 2
N désigne le nombre de paires de pôles magnétiques de ladite partie ferromagnétique entraînée 1
et M désigne le nombre de pièces ferromagnétiques de ladite seconde parties 3.

3. Système de transmission selon la revendication 1 ou 2 **caractérisé en ce que** la partie extérieure est constituée par une culasse ferromagnétique présentant des dents entourées chacune par une bobine électrique d'excitation, et supportant chacune un aimant permanent dont le sens d'aimantation est inversé pour deux dents consécutives.

4. Système de transmission selon la revendication 1 ou 2 **caractérisé en ce que** la partie extérieure est constituée par une culasse ferromagnétique présentant des dents, au moins certains tronçons s s'étendant entre deux dents consécutives étant entourée par une bobine électrique dont les spires sont formées dans un plan radial.

5. Système de transmission selon l'une quelconque des revendications 1 à 4 **caractérisé en ce que** la partie intérieure est constituée par une culasse ferromagnétique présentant des dents, au moins certains tronçons s s'étendant entre deux dents consécutives étant entourée par une bobine électrique dont les spires sont formées dans un plan radial.

6. Système de transmission selon l'une quelconque des revendications 1 à 4 **caractérisé en ce que** la partie intérieure est constituée par une culasse ferromagnétique présentant des dents, au moins certains tronçons s s'étendant entre deux dents consécutives étant entourée par une bobine électrique dont les spires sont formées dans un plan radial.

7. Système de transmission selon l'une des revendications 3 ou 4 **caractérisé en ce que** la partie intérieure est constituée par une culasse ferromagnétique présentant des dents, et **en ce que** seules les dents polaires correspondant à l'un des types de pôles (Nord ou Sud) comportant un aimant permanent et **en ce que** la partie intérieure comporte des bobines électriques d'excitation d'une partie au moins des pôles.

8. Système de transmission selon l'une des revendications 3 ou 4 **caractérisé en ce que** la partie intérieure est constituée par une culasse ferromagnétique présentant des dents, **en ce que** seules les dents polaires correspondant à l'un des types de pôles (Nord ou Sud) comportant un aimant permanent et **en ce que** la partie intérieure est dépourvue de bobine électrique.

9. Système de transmission selon l'une quelconque des revendications précédentes **caractérisé en ce que** ledit moyen de détection des efforts comprend un moyen de mesure de la force électromotrice circulant dans au moins une desdites bobines.

10. Système de transmission selon l'une quelconque des revendications précédentes **caractérisé en ce que** certaines dents au moins présentent un aimant permanent et sont également excitées par une bobine électrique.

11. Système de transmission de couple selon l'une quelconque des revendications précédentes **caractérisé en ce que** lesdites parties sont de forme tubulaires et présentent des dents s'étendant radialement.

12. Système de transmission de couple selon la revendication précédente **caractérisé en ce que** la partie intérieure est entraînée.

13. Système de transmission de couple selon la revendication 10 **caractérisé en ce que** la partie extérieure est entraînée.

14. Système de transmission de couple selon l'une quelconque des revendications 1 à 9 **caractérisé en ce que** lesdites parties sont de forme discales et présentent des dents perpendiculairement à un plan transversal.

15. Système de transmission de couple selon l'une quelconque des revendications précédentes **caractérisé en ce que** ledit moyen de pilotage comporte une interface d'entrée pour recevoir des signaux provenant de capteurs externes.

16. Système de transmission selon l'une quelconque des revendications précédentes **caractérisé en ce que** ledit moyen de pilotage commande une augmentation du courant d'alimentation des bobines électriques en cas de détection d'un dépassement d'une valeur seuil d'effort.

17. Système de transmission selon l'une quelconque des revendications 1 à 14 **caractérisé en ce que** ledit moyen de pilotage commande une diminution du courant d'alimentation des bobines électriques en cas de détection d'un dépassement d'une valeur seuil d'effort.

18. Système de transmission selon l'une quelconque des revendications précédentes **caractérisé en ce que** la puissance fournie par les seuls aimants permanents assure une capacité de transmission d'effort correspondant à un niveau de sécurité en cas de défaillance, et **en ce que** le moyen de pilotage modifie la capacité de transmission d'effort par l'alimentation desdites bobines électriques.

19. Système de transmission selon l'une quelconque des revendications précédentes **caractérisé en ce que** lesdits aimants permanents sont de type Alnico.

20. Système de transmission selon l'une quelconque des revendications précédentes **caractérisé en ce que** l'une au moins des culasses comporte des canaux de circulation d'un fluide de refroidissement.

## Patentansprüche

1. Übertragungssystem zwischen einer Eingangswelle und einer Ausgangswelle, das aus einem ferromagnetischen Antriebsteil 2, einem ferromagnetischen Abtriebsteil 1 und einen ferromagnetischen Zwischenteil 3 besteht, wobei diese drei Teile 1, 2, 3 zueinander beweglich sind,
- wobei einer der Teile 1 N Paare von Magnetpolen aufweist, die mit einem zweiten der Teile 3, der M ferromagnetische Teile aufweist, interagieren, wobei M≠N,
- wobei der zweite Teil 3, der mit einem dritten der Teile 2, der P Polpaare aufweisen, interagiert,
und dass
- mindestens ein Teil der Teile einen Dauermagnet umfasst,
- und mindestens ein Teil der Teile aus einem Polzahn bestehen, der eine elektrische Spule trägt,
**dadurch gekennzeichnet, dass** das System außerdem ein Mittel zum Erfassen der Kräfte umfasst, die zwischen der Eingangswelle und der Ausgangswelle angelegt werden, das aus einem Mittel zum Messen der elektromotorischen Kraft, die in mindestens einer der Spulen zirkuliert, und aus einem Mittel zum Steuern der Versorgung der elektrischen Spulen besteht, um die Magnetleistung, die von den Dauermagneten geliefert wird, und die Polzähne, die von den elektrischen Spulen erregt werden, in Abhängigkeit von einem Sollwert und dem Signal, das von dem Erfassungsmittel der Kräfte geliefert wird, zu steuern.

2. Übertragungssystem nach Anspruch 1, **dadurch gekennzeichnet, dass** der zweite Teil 3, der mit einem dritten der Teile 2 interagiert, der P Polpaare mit P=|N-M| aufweist, interagiert,
wobei P die Anzahl von Polpaaren des dritten der Teile 2 bezeichnet
N die Anzahl von Magnetpolpaaren des ferromagnetischen Abtriebsteils 1 bezeichnet
und M die Anzahl ferromagnetischer Teile des zweiten Teile 3 bezeichnet.

3. Übertragungssystem nach Anspruch 1 oder 2, **dadurch gekennzeichnet, dass** der Außenteil aus einem ferromagnetischen Magnetjoch besteht, das Zähne aufweist, die jeweils von einer elektrischen Erregerspule umgeben sind und jeweils einen Dauermagnet tragen, dessen Magnetisierungsrichtung für zwei aufeinanderfolgende Zähne umgekehrt ist.

4. Übertragungssystem nach Anspruch 1 oder 2, **dadurch gekennzeichnet, dass** der Außenteil aus einem ferromagnetischen Magnetjoch besteht, das Zähne aufweist, wobei sich mindestens bestimmte Abschnitte s, die sich zwischen zwei aufeinanderfolgenden Zähnen erstrecken, von einer elektrischen Spule umgeben sind, deren Windungen in einer radialen Ebene gebildet sind.

5. Übertragungssystem nach einem der Ansprüche 1 bis 4, **dadurch gekennzeichnet, dass** der Innenteil aus einem ferromagnetischen Magnetjoch besteht, das Zähne aufweist, wobei mindestens bestimmte Abschnitte s, die sich zwischen zwei aufeinanderfolgenden Zähnen erstrecken, von einer elektrischen Spule umgeben sind, deren Windungen in einer radialen Ebene gebildet sind.

6. Übertragungssystem nach einem der Ansprüche 1 bis 4, **dadurch gekennzeichnet, dass** der Innenteil aus einem ferromagnetischen Magnetjoch besteht, das Zähne aufweist, wobei mindestens bestimmte Abschnitte s, die sich zwischen zwei aufeinanderfolgenden Zähnen erstrecken, von einer elektrischen Spule umgeben sind, deren Windungen in einer radialen Ebene gebildet sind.

7. Übertragungssystem nach einem der Ansprüche 3 oder 4, **dadurch gekennzeichnet, dass** der Innenteil aus einem ferromagnetischen Magnetjoch besteht, das Zähne aufweist, und dass nur die Polzähne, die einem der Poltypen (plus oder minus) entsprechen, einen Dauermagnet umfassen, und dass der Innenteil elektrische Erregerspulen mindestens eines Teils der Pole umfasst.

8. Übertragungssystem nach einem der Ansprüche 3 oder 4, **dadurch gekennzeichnet, dass** der Innenteil aus einem ferromagnetischen Magnetjoch besteht, das Zähne aufweist, und dass nur die Polzähne, die einem der Poltypen (plus oder minus) entsprechen, einen Dauermagnet umfassen, und dass der Innenteil keine elektrische Spule aufweist.

9. Übertragungssystem nach einem der vorstehenden Ansprüche, **dadurch gekennzeichnet, dass** das Mittel zum Erfassen der Kräfte ein Mittel zum Messen der elektromotorischen Kraft, die in mindestens einer der Spulen fließt, umfasst.

10. Übertragungssystem nach einem der vorstehenden Ansprüche, **dadurch gekennzeichnet, dass** mindestens bestimmte Zähne einen Dauermagnet aufweisen und auch von einer elektrischen Spule erregt werden.

11. Drehmomentübertragungssystem nach einem der vorstehenden Ansprüche, **dadurch gekennzeichnet, dass** die Teile Röhrenform aufweisen und Zähne, die sich radial erstrecken, aufweisen.

12. Drehmomentübertragungssystem nach dem vorstehenden Anspruch, **dadurch gekennzeichnet, dass** der Innenteil angetrieben ist.

13. Drehmomentübertragungssystem nach Anspruch 10, **dadurch gekennzeichnet, dass** der Außenteil angetrieben ist.

14. Drehmomentübertragungssystem nach einem der Ansprüche 1 bis 9, **dadurch gekennzeichnet, dass** die Teile Scheibenform aufweisen und Zähne senkrecht zu einer Querebene aufweisen.

15. Drehmomentübertragungssystem nach einem der vorstehenden Ansprüche, **dadurch gekennzeichnet, dass** das Steuermittel eine Eingangsschnittstelle umfasst, um Signale, die von externen Sensoren kommen, zu empfangen.

16. Übertragungssystem nach einem der vorstehenden Ansprüche, **dadurch gekennzeichnet, dass** das Steuermittel eine Steigerung des Versorgungsstroms der elektrischen Spulen in dem Fall des Erfassens eines Überschreitens eines Kraftschwellenwerts steuert.

17. Übertragungssystem nach einem der Ansprüche 1 bis 14, **dadurch gekennzeichnet, dass** das Steuermittel eine Verringerung des Versorgungsstrom der elektrischen Spulen im Fall des Erfassens einer Überschreitung eines Kraftschwellenwerts steuert.

18. Übertragungssystem nach einem der vorstehenden Ansprüche, **dadurch gekennzeichnet, dass** die Leistung, die allein von den Dauermagneten geliefert wird, eine Kraftübertragungskapazität sicherstellt, die einem Sicherheitsniveau im Versagensfall entspricht, und dass das Steuermittel die Kraftübertragungskapazität durch die Versorgung der elektrischen Spulen modifiziert.

19. Übertragungssystem nach einem der vorstehenden Ansprüche, **dadurch gekennzeichnet, dass** die Dauermagnete vom Typ Alnico sind.

20. Übertragungssystem nach einem der vorstehenden Ansprüche, **dadurch gekennzeichnet, dass** mindestens eines der Magnetjoche Zirkulationskanäle eines Kühlfluids umfasst.

## Claims

1. Transmission system between an input shaft and an output shaft consisting of a driving ferromagnetic portion 2, a driven ferromagnetic portion 1 and an intermediate ferromagnetic portion 3, these three portions 1, 2, 3 being movable with respect to one another,
- one of said portions 1 having N pairs of magnetic poles interacting with a second of said portions 3 having M ferromagnetic parts, where M≠N,
- said second portion 3 interacting with a third of said portions 2 having P pairs of poles,
and in that
- at least one portion of said parts comprising a permanent magnet,
- and at least one portion of said parts being made up of a polar tooth bearing an electrical coil,
**characterised in that** said system additionally includes a means for detecting forces applied between said input shaft and said output shaft that is made up of a means for measuring the electromotive force flowing through at least one of said coils, and a means for controlling the supply of power to said electrical coils in order to control the magnetic power delivered by said permanent magnets and the polar teeth excited by electrical coils, according to a setpoint value and to the signal provided by said force detection means.

2. Transmission system according to claim 1 **characterised in that** said second portion 3 interacting with a third of said portions 2 having P pairs of poles with P=|N-M|,
where P designates the number of pairs of poles of said third of said portions 2
N designates the number of pairs of magnetic poles of said driven ferromagnetic portion 1
and M designates the number of ferromagnetic parts of said second portions 3.

3. Transmission system according to claim 1 or 2 **characterised in that** the outer portion is made up of a ferromagnetic cylinder head having teeth that are each surrounded by an electrical excitation coil, and with each one supporting a permanent magnet of which the direction magnetisation is reversed for two consecutive teeth.

4. Transmission system according to claim 1 or 2 **characterised in that** the outer portion is made up of a ferromagnetic cylinder head that has teeth, at least some segments s extending between two consecutive teeth being surrounded by an electrical coil of which the windings are formed in a radial plane.

5. Transmission system according to any of claims 1 to 4 **characterised in that** the inner portion is made up of a ferromagnetic cylinder head that has teeth, at least some segments s extending between two consecutive teeth being surrounded by an electrical coil of which the windings are formed in a radial plane.

6. Transmission system according to any of claims 1 to 4 **characterised in that** the inner portion is made up of a ferromagnetic cylinder head that has teeth, at least some segments s extending between two consecutive teeth being surrounded by an electrical coil of which the windings are formed in a radial plane.

7. Transmission system according to one of claims 3 or 4 **characterised in that** the inner portion is made up of a ferromagnetic cylinder head that has teeth, and **in that** only the polar teeth corresponding to one of the types of poles (North or South) comprising a permanent magnet and **in that** the inner portion comprises electrical excitation coils of a portion at least of the poles.

8. Transmission system according to one of claims 3 or 4 **characterised in that** the inner portion is made up of a ferromagnetic cylinder head that has teeth, **in that** only the polar teeth corresponding to one of the types of poles (North or South) comprising a permanent magnet and **in that** the inner portion is devoid of an electrical coil.

9. Transmission system according to any preceding claim **characterised in that** said means for detecting forces comprises a means for measuring the electromotive force flowing through at least one of said coils.

10. Transmission system according to any preceding claim **characterised in that** some teeth at least have a permanent magnet and are also excited by an electrical coil.

11. Torque transmission system according to any preceding claim **characterised in that** said portions are of tubular shape and have teeth extending radially.

12. Torque transmission system according to the preceding claim **characterised in that** the inner portion is driven.

13. Torque transmission system according to claim 10 **characterised in that** the outer portion is driven.

14. Torque transmission system according to any of claims 1 to 9 **characterised in that** said portions are of disc shape and have teeth perpendicularly to a transverse plane.

15. Torque transmission system according to any preceding claim **characterised in that** said means for controlling comprises an input interface for receiving signals coming from external sensors.

16. Transmission system according to any preceding claim **characterised in that** said means for controlling controls an increase in the power supply current of the electrical coils in case of the detection of an exceeding of a force threshold value.

17. Transmission system according to any of claims 1 to 14 **characterised in that** said means for controlling controls a decrease in the power supply current of the electrical coils in case of the detection of an exceeding of a force threshold value.

18. Transmission system according to any preceding claim **characterised in that** the power supplied by the permanent magnets alone ensures a force transmission capacity corresponding to a level of safety in case of failure, and **in that** the means for controlling modifies the force transmission capacity by the power supply of said electrical coils.

19. Transmission system according to any preceding claim **characterised in that** said permanent magnets are of the Alnico type.

20. Transmission system according to any preceding claim **characterised in that** at least one of the cylinder heads comprises channels for the circulation of a cooling fluid.
